# EUROPÄISCHE PATENTSCHRIFT

(11) **EP 0 573 797 B1**
(45) Veröffentlichungstag und Bekanntmachung des Hinweises auf die Patenterteilung: **12.03.1997**
(21) Anmeldenummer: 93107620.2
(22) Anmeldetag: 11.05.1993
(51) Int. Cl.: C01B 15/12, C11D 3/39, C11D 17/06

(54) **Verfahren zur Erhöhung des Schüttgewichts von Natriumperborat-monohydrat**
Method for increasing bulk density of sodium perborate monohydrate
Méthode pour augmenter la densité du monohydrate de perborate de sodium

(30) Priorität: 12.06.1992 DE 4219229
(43) Veröffentlichungstag der Anmeldung: 15.12.1993
(73) Patentinhaber: Degussa Aktiengesellschaft, 60311 Frankfurt (DE)
(72) Erfinder: Bertsch-Frank, Birgit, Dr., W-6450 Hanau 9 (DE); Stein, Günter, W-6369 Nidderau 4 (DE); Zikofsky, Wolfgang, Dr., W-6451 Ronneburg 1 (DE); Herzig, Jörg, W-6457 Maintal 2 (DE)

(56) Entgegenhaltungen:
- EP-A- 0 433 653
- EP-A- 0 446 597
- EP-A- 0 471 318

## Beschreibung

Die Erfindung betrifft ein Verfahren zur Erhöhung des Schüttgewichts von Natriumperborat-monohydrat, das durch Dehydratation von Natriumperborat-tetrahydrat erhalten wurde. Das Verfahren umfaßt eine Vorverdichtung und Kompaktierung von Natriumperborat-monohydrat ohne Zugabe von Fremdstoffen.

Unter den Natriumperborat-hydraten werden Verbindungen der allgemeinen Formel 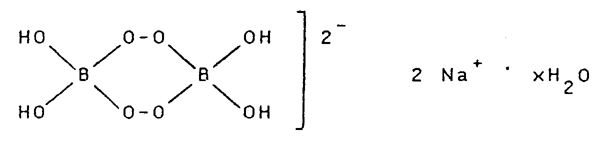 verstanden, wobei für das in der Technik üblicherweise als Tetrahydrat bezeichnete Produkt x gleich 6 und für das als Monohydrat bezeichnete Produkt x gleich 0 ist. Gegenüber dem Tetrahydrat mit einem Aktivsauerstoffgehalt von in der Praxis 10,0 bis 10,4 Gew.-% zeichnet sich das Monohydrat durch seinen höheren Aktivsauerstoffgehalt, nämlich üblicherweise 15,0 bis 16,0 %, sowie seine höhere Lösegeschwindigkeit aus. Für den Einsatz des Natriumperborat-monohydrats in körnigen Wasch- und Reinigungsmitteln, insbesondere sogenannten Waschmittel-Volumenkonzentraten, besteht ein zunehmendes Interesse, anstelle der bisher marktüblichen Produkte mit einem Schüttgewicht von 500 bis maximal 580 g/l solche mit einem höheren Schüttgewicht, vorzugsweise 700 bis 800 g/l, jedoch unverändert hoher Lösegeschwindigkeit einzusetzen.

Üblicherweise wird Natriumperborat-monohydrat durch Dehydratation von Natriumperborat-tetrahydrat mittels erhitzter Luft im Fließbett hergestellt - beispielhaft wird auf die DE-PS 970 495, DE-PS 22 58 319, DE-PS 19 30 286, EP-A 0 202 519 hingewiesen. Durch die genannte Dehydratation gelingt es nur, zu Monohydraten mit einem Schüttgewicht unter 600 g/l zu gelangen. Durch Besprühen so hergestellter Produkte mit diversen Lösungen mit nachfolgender Trocknung gemäß dem in der US-PS 4,002,434 beschriebenen Verfahren kann das Schüttgewicht zwar geringfügig erhöht werden, der technische Aufwand ist aber sehr erheblich.

Es hat nicht an weiteren Versuchen gefehlt, Natriumperborat-monohydrat mit einem Schüttgewicht von 700 g/l und mehr zu gewinnen. Im Verfahren der US-PS 4,115,519 werden wäßrige Lösungen von Natriummetaborat und Wasserstoffperoxid auf in einem Wirbelschichttrockner befindliche Keime aufgesprüht. Das dabei erhältliche granulatförmige Monohydrat kann zwar ein Schüttgewicht um 1000 g/l aufweisen, jedoch ist die Lösegeschwindigkeit weit unterhalb der vom Markt geforderten Spezifikationsgrenze. Durch Mitverwendung oberflächenaktiver Stoffe im zuvor skizzierten Verfahren läßt sich gemäß der Lehre der US-PS 4,215,097 die Lösegeschwindigkeit zwar wieder erhöhen, der marktübliche Wert (100 % löslich in weniger als 1 Minute bei 15 °C und einer Konzentration von 2 g/l) wird aber nicht erreicht.

Eine Granulierung von durch Sprühtrocknung hergestelltem amorphen Natriumperborat-monohydrat unter Mitverwendung von Natriumperborat-tetrahydrat bei 50 bis 90 °C ist aus der EP-B 0 328 768 bekannt: Das zugesetzte Tetrahydrat schmilzt unter den Granulierbedingungen, dient also als Granulierhilfsmittel. Das nach diesem Verfahren erhältliche Monohydrat weist zwar das gewünschte erhöhte Schüttgewicht bei gleichzeitig hoher Lösegeschwindigkeit auf, die zuverlässige Einstellung der Verfahrensparameter ist aber schwierig.

Eine Verbesserung der Granulation von sprühgetrocknetem, im wesentlichen amorphen Natriumperborat-monohydrat lehrt die DE-PS 39 41 851: Das Ausgangsprodukt mit einem Teilchenspektrum von 90 % kleiner 100 µm wird ohne die Zugabe von Hilfsstoffen zunächst vorverdichtet und dann zwischen Walzen kompaktiert; die Schülpen werden auf das gewünschte Maß zerkleinert.

In der EP-A 0 446 597 wird ein Verfahren zur Herstellung von Peroxoborat-Agglomeraten mit einem Aktivsauerstoffgehalt von Wenigstens 14 Gew.-% gelehrt, bei welchem durch ein Sprühtrocknungsverfahren hergestellte amorphe Primärpartikel aus Peroxoborat einer verdichtenden Preßagglomeration unterworfen werden. Bei den Peroxoboraten handelt es sich um solche mit einem Na : B-Verhältnis von 0,33 : 1 bis 1 : 1.

In der vorgenannten DE-PS 39 41 851 wird durch Vergleichsversuche dargelegt, daß durch Dehydratation von Tetrahydrat hergestelltes handelsübliches und damit kristallines und gut rieselfähiges Natriumperborat-monohydrat unter den gleichen Bedingungen praktisch nicht kompaktiert werden konnte. Die Ursachen hierfür sind zum einen die sehr gute Fließfähigkeit des Produktes, wodurch es sich den angreifenden Preßkräften bei der Verdichtung entzieht, zum anderen die Produkteigenschaften. Durch die Friktion in den Kompaktierwerkzeugen steigt die Produkttemperatur bis auf 70 °C an. Das Produkt zersetzt sich, klebt sehr stark an den Kompaktiereinrichtungen und bildet glasartig durchsichtige schwer lösbare Schülpen. Eine dauerhafte Kompaktierung, mit der das gewünschte Produkt erzielt werden kann, ist somit nicht möglich.

Die Probleme, welche mit der Granulierung von handelsüblichem, also durch Dehydratation von Natriumperborat-tetrahydrat hergestelltem Natriumperborat-monohydrat unter Verwendung von Kompaktierwalzen einhergehen, werden im Verfahren der DE-OS 39 27 398 dadurch behoben, daß dem zu granulierenden Natriumperborat-monohydrat Alkali- oder Erdalkalisalze zugesetzt werden. Durch dieses Verfahren wird unter Erhalt der hohen Lösegeschwindigkeit das Schüttgewicht stark erhöht. Nachteilig an diesen Verfahren ist aber das Erfordernis, Fremdsalze, wobei Natriumcarbonat-decahydrat besonders bevorzugt wird, mitverwenden zu müssen.

Im Verfahren gemäß der DE-OS 41 22 513 werden Natriumperborat-monohvdrat-Granulate aus durch Entwässerung von Natriumperborat-tetrahydrat gewonnenem Natriumperborat-monohydrat in Abwesenheit von Agglomerierungshilfsmitteln durch Preßagglomeration mit einer wenigstens leicht strukturierten Walzenpresse und Zerkleinerung der Schülpen hergestellt. Seitens der Anmelderin der vorliegenden Erfindung wurde bereits früher festgestellt - siehe Vergleichsbeispiele in der DE-PS 39 41 851 -, daß handelsübliches Natriumperborat-monohydrat auf diese Weise nicht befriedigend kompaktiert werden konnte, obgleich eine Walzenpresse mit strukturierten Walzen (Querriffelung) zum Einsatz kam und der Druck im Bereich desjenigen der DE-OS 41 22 513 lag.

Aufgabe der vorliegenden Erfindung ist, ein Verfahren zur Erhöhung des Schüttgewichts von handelsüblichem, durch Dehydratation von Natriumperborat-tetrahydrat hergestelltem Natriumperborat-monohydrat aufzuzeigen, das auf der Walzenkompaktierung beruht, keinen Zusatz von Fremdsalzen erfordert und sich für den Dauerbetrieb eignet.

Gefunden wurde ein Verfahren zur Erhöhung des Schüttgewichts von teilchenförmigem Natriumperborat-monohydrat, das durch Dehydratation von Natriumperborat-tetrahydrat hergestellt wurde, durch Kompaktierung des genannten teilchenförmigen Natriumperborat-monohydrats in einer Walzenpresse mit strukturierten Walzen bei einem Anpreßdruck von 5 bis 50 kN/cm wirksamer Walzenlänge zu einem Schülpenband und Zerkleinerung desselben auf das gewünschte Maß in bekannter Weise, das dadurch gekennzeichnet ist, daß der Kompaktierung eine Vorverdichtungsstufe vorgeschaltet, der Vorverdichtungsstufe von der Inbetriebnahme bis zur Ausbildung eines im wesentlichen kontinuierlichen Schülpenbandes Natriumperborat-monohydrat mit einem Staubanteil, dessen Korndurchmesser kleiner 0,1 mm ist, im Bereich von 5 bis 30 Gew.-% zugeführt und bei der Vorverdichtung ein Druck von mehr als 20 kPa eingestellt wird, und daß die Temperatur der Walzenoberfläche und der produktberührten Teile der Verdichtungszone des Vorverdichters sowie des vorzuverdichtenden und zu kompaktierenden Materials auf unterhalb 20 °C gehalten wird.

Es war in Anbetracht des Standes der Technik nicht vorhersehbar, daß es gelingt, zwischen den Kompaktierwalzen ein im wesentlichen kontinuierliches Schülpenband zu bilden, wenn das zu kompaktierende Monohydrat dem Walzenkompaktor in vorverdichteter Form zugeführt wird und zusätzlich die Temperatur der produktberührten Flächen des Vorverdichters und des Walzenkompaktors auf unterhalb 20 °C und jene der Oberfläche der Kompaktierwalzen vorzugsweise zwischen 13 und 17 °C gehalten wird. Als Staub wird Material mit einem Korndurchmesser von kleiner 0,1 mm verstanden.

Handelsübliches Natriumperborat-monohydrat weist üblicherweise ein Kornspektrum zwischen 0,1 und 0,8 mm auf; der Staubanteil liegt in der Regel unter 1 Gew.-%. Bei einem solchen Ausgangsprodukt ist es notwendig, zumindest zu Beginn des Verfahrens, also bei der Inbetriebnahme der Walzenpresse, zum Zwecke der verbesserten Schülpenbildung der Verdichtungsstufe Natriumperborat-monohydrat mit einem Staubanteil (Korndurchmesser kleiner 0,1 mm) im Bereich von 5 bis 30 Gew.-% zuzuführen; handelsüblichem Natriumperborat-monohydrat wird also während dieser Phase vor der Vorverdichtung staubförmiges oder staubreiches Monohydrat zugemischt. Sobald sich ein im wesentlichen kontinuierliches Schülpenband gebildet hat, kann die Zugabe an staubförmigem oder staubreichem Monohydrat zu dem sehr rieselfähigen handelsüblichen Monohydrat überraschenderweise reduziert oder ganz eingestellt werden. Bei dem in der Startphase zuzumischenden staubförmigen oder staubreichen (Staubanteil größer etwa 10 %) Monohydrat kann es sich um Monohydrat beliebiger Provenienz handeln, also Monohydrat aus bekannten Dehydratisierungsverfahren von Natriumperborat-tetrahydrat oder Monohydrat aus Sprühtrocknungsverfahren. Staub, wie er bei der Granulierung, also der Zerkleinerung der Schülpen sowie gegebenenfalls der Abrundung des zerkleinerten Materials anfällt, eignet sich gut als Zusatz zum Zwecke der Schülpenbildung in der Startphase. Es ist ein Vorteil des erfindungsgemäßen Verfahrens, daß bei der Zerkleinerung der Schülpen zwangsweise anfallender Staub über die Staltphase hinaus weiter dem vorzudichtenden und zu kompaktierenden Material zugefügt werden kann und in der Praxis auch wird.

Es ist zweckmäßig, sowohl während der Vorverdichtung des Monohydrats als auch während der Kompaktierung des vorverdichteten Materials die Aggregate so zu kühlen, daß die Temperatur der Monohydrat-Schülpen um 20 °C und vorzugsweise unter 20 °C gehalten werden kann. Ohne eine derartige Kühlung steigt die Produkttemperatur durch die Friktion zwischen beispielsweise einer Verdichterschnecke und einer sich im Verdichtungsbereich verengenden Kammer des Vorverdichters sowie zwischen den Kompaktierwalzen rasch auf bis zu 70 °C an, und es kommt zu starken Verklebungen und zur Bildung glasiger Schülpen mit vermindertem Aktivsauerstoffgehalt.

Es hat sich gezeigt, daß eine der Kompaktierstufe vorgeschaltete Verdichterstufe wesentlich für den Erfolg ist. Im Falle einer einfachen, nicht verdichtenden Förderung von handelsüblichem oder 5 bis 30 Gew. % Monohydratstaub enthaltendem Monohydrat in den Spalt der Kompaktierwalzen kommt es zu einer völlig unzureichenden Schülpenbildung. Das genaue Maß der Vorverdichtung wird der Fachmann durch einen Vorversuch ermitteln - eine zu geringe Vorverdichtung führt zu bruchstückhaften Schülpen, insbesondere im Falle der Zufuhr eines Monohydrats mit niedrigem Staubanteil, eine zu hohe Vorverdichtung kann sich in der Ausbildung sehr harter Schülpen und einer Abnahme der Lösegeschwindigkeit bemerkbar machen. Im allgemeinen wird am Ausgang der Vorrichtung zur Vorverdichtung, also direkt oberhalb des Spalts der Walzen, ein Druck von mehr als 20 kPa und vorzugsweise ein solcher im Bereich von 80 bis 140 kPa eingestellt. Bei der Verwendung handelsüblicher Verdichterschnecken läßt sich der Druck und damit der Grad der Vorverdichtung durch die Wahl der Umdrehungszahl der Schnecke und Umdrehungszahl der Kompaktierwalzen steuern.

Kompaktiermaschinen mit einem kühlbaren Walzwerk und Vorrichtungen für die Preßdruckerzeugung und horizontale oder vertikale Produktzufuhr sind dem Fachmann bekannt und im Handel erhältlich. Die Walzen können starr oder ein- oder doppelseitig federnd gelagert sein. Die Beschickung der Kompaktierwalzen bei gleichzeitiger Vorverdichtung erfolgt zweckmäßigerweise mittels zylindrischer oder vorzugsweise zylindrisch- konischer Schnecken in entsprechenden kühlbaren Gehäusen, welche unmittelbar auf den Kompaktierwalzen aufgesetzt sind.

Zur Durchführung des erfindungsgemäßen Verfahrens sind Kompaktiermaschinen mit sogenannten strukturierten Glattwalzen, vorzugsweise Walzen mit feiner Querriffelung, geeignet; Formmuldenwalzen sind für den Dauerbetrieb weniger geeignet. Anpreßdrucke im Bereich von 5 bis 50 kN/cm wirksamer Walzenlänge, vorzugsweise 5 bis 20 kN/cm und insbesondere 10 bis 20 kN/cm sind anwendbar.

Soweit dem zu verdichtenden Monohydrat staubförmiges oder staubreiches Monohydrat zugesetzt wird, kann dies in an sich bekannter Weise geschehen, beispielsweise unter Verwendung von Mischern oder durch einfaches Zusammenführen der Produktströme mittels Dosiereinrichtungen.

An die Walzenkompaktierung schließen sich an sich bekannte Maßnahmen zum Zerkleinern der erhaltenen Schülpe auf das gewünschte Maß, auch als Granulierung bezeichnet, und Kornfraktionierung des Granulats, etwa unter Verwendung von Sieb- und Sichteinrichtungen, an. Überkorn wird in die Zerkleinerungsvorrichtung, Unterkorn erneut in die Vorverdichtungsstufe zurückgeführt. Besonders vorteilhaft ist es, mittels Sieben das Überkorn abzutrennen und anschließend das Granulat unter mäßiger mechanischer Beanspruchung, beispielsweise in einem Drehrohr oder Fließbett, abzurunden und in Sichteinrichtungen von anhaftendem Staub zu befreien. Zum Zerkleinern der Schülpe sind einfache Messerwerke, Mühlen oder Brecher geeignet; besonders bevorzugt werden ein- oder mehrstufige Siebkorbgranulatoren und Walzwerke eingesetzt.

Durch das erfindungsgemäße Verfahren sind in einfacher Weise und ohne die Mitverwendung von anderen Salzen Natriumperborat-monohydrat-Qualitäten zugänglich, welche sich gegenüber dem eingesetzten Monohydrat durch ein erhöhtes Schüttgewicht, vorzugsweise ein solches oberhalb 700 g/l, bei praktisch unveränderten Werten für die Lösegeschwindigkeit, den Aktivsauerstoffgehalt und den Abrieb auszeichnen. Erfindungsgemäß hergestellte Produkte lassen sich damit sehr gut als Aktivsauerstoffkomponente in körnigen Wasch-, Bleich-und Reinigungsmitteln einsetzen. Das Schüttgewicht der Bleichkomponenten kann demjenigen der übrigen Bestandteile angepaßt werden, so daß es bei der Einarbeitung zu keinen Entmischungen kommt.

### Beispiele

Handelsübliches, durch Dehydratation gewonnenes Natriumperborat-monohydrat (Qualität Q 40 der Firma Degussa AG) mit einem Schüttgewicht von 540 g/l, einem Staubanteil (<0,1 mm) unter 1 Gew.-%, einer Kornfraktion zwischen 0,1 und 0,2 mm von etwa 3 Gew.-% und einem Grobanteil (>0,8 mm) unter 1 Gew.-% wurde in einer mit einem Vorverdichter ausgestatteten Walzenkompaktieranlage mit starr gelagerten kühlbaren Walzen mit einer Querriffelung behandelt. Der auf den Walzen aufgesetzte Vorverdichter, der auch der Materialzuführung diente, umfaßte ein zylindrischkonisch geformtes kühlbares Gehäuse und eine regelbare Verdicherschnecke.

Die bei der Kompaktierung erhaltenen Schülpen wurden in einem Siebkorbgranulator auf die gewünschte Korngröße zerkleinert, anschließend wurde mittels eines Schwingsiebs gesiebt und das Produkt durch Sichten in der wirbelnden Schicht von anhaftenden und beim Wirbeln gebildetem Staub befreit.

### Beispiel 1

Hier wurden zur Anfahrphase dem Monohydrat (Qualität Q 40) 40 Gewichtsteile Monohydratstaub pro 100 Gewichtsteile Qualität Q 40 zugemischt und das Gemisch dem Vorverdichter zugeführt. Der Druck am Ausgang des Vorverdichters wurde mittels Einstellung der Drehzahl der Vorverdichterschnecke und der Walzen auf 120 kPa eingestellt. Nach einwandfreier Schülpenbildung innerhalb weniger Minuten bei einem Walzenanpreßdruck von ca. 10 kN/cm bei einem Materialdurchsatz von 26 kg/h wurde die Zugabemenge an Monohydratstaub auf Null zurückgefahren, ohne daß es zum Abbruch der Schülpe und Durchrieseln nicht kompaktierten Monohydrats kam. Die Temperatur des Gehäuses des Vorverdichters sowie der Oberfläche der Walzen wurde mittels Kühlwasser auf 15 bis 17 °C gehalten; die Austrittstemperatur der Schülpe betrug 19 °C.

Innerhalb einer Gesamtbetriebsdauer von 22 h bei einem Durchsatz von 26 kg/h traten keine Anbackungen oder Unterbrechungen infolge Abriß der Schülpe auf. Das Schüttgewicht der Kornfraktion zwischen 0,2 und 0,8 mm betrug 730 g/l. Der Aktivsauerstoffgehalt betrug 15,5 %, die Lösezeit (1 g / 500 ml Wasser, 15 °C) lag zwischen 14 bis 31 sec.

### Beispiel 2

Die prinzipielle Durchführung der Anfahrphase bis zur Schülpenbildung entsprach jener des Beispiels 1. Nach der Schülpenbildung wurde jedoch das gesamte, bei der Zerkleinerung und Abrundung des granulierten Produkts angefallene staubreiche Monohydrat dem vorzuverdichtenden Produkt (Q 40) zugemischt - pro 100 Teile Q 40 wurden ca. 40 Teile Rückführgut mit einem Kornspektrum zwischen 1 und 200 µm zugemischt.

Innerhalb von 18 h traten bei einem Durchsatz von 26 kg/h keine Störungen auf. Das Schüttgewicht der Kornfraktion zwischen 0,2 und 0,8 mm betrug 785 g/l, der Aktivsauerstoffgehalt betrug 15,3 %, die Lösezeit lag zwischen 24 und 31 sec.

### Vergleichsbeispiele

### VB 1

Natriumperborat-monohydrat (Qualität Q 40) wurde über ein senkrechtes Rohr von 95 mm Durchmesser und 2 m Länge den Kompaktierwalzen zugeführt. Durch diese Fahrweise entsteht ein Vordruck von 0,11 Pa vor den Verdichterwalzen. Die Walzendrehzahl wurde auf 5 min⁻¹ eingestellt.

Zwischen den Kompaktierwalzen wurden trotz der niedrigen Drehzahl nur etwa 5 % des zugeführten Gutes verdichet. Die Festigkeit der Schülpenbruchstücke war so gering, daß nach dem Granuliervorgang kein verdichtetes Material zu erkennen war.

### VB 2

Q 40 wurde über die Vorverdichterschnecke den Kompaktierwalzen (Drehzahl 5 min⁻¹) zugeführt. Aus der Leistungsaufnahme der Schnecke errechnet sich ein Druck von 20 kPa. Durch den geringen Vordruck werden nur ca. 30 % des zugeführten Gutes zu Schülpenbruchstücken verdichtet. Nach dem Granulier- und Klassiervorgang betrug der Kornanteil der Fraktion zwischen 0,2 mm und 0,8 mm 21 % des Ausgangsmaterial. Die Schüttdichte betrug wegen der geringen Verdichtung 625 g/l.

## Patentansprüche

1. Verfahren zur Erhöhung des Schüttgewichts von teilchenförmigem Natriumperborat-monohydrat, das durch Dehydratation von Natriumperborat-tetrahydrat hergestellt wurde, durch Kompaktierung des genannten teilchenförmigen Natriumperborat-monohydrats in einer Walzenpresse mit strukturierten Walzen bei einem Ahpreßdruck von 5 bis 50 kN/cm wirksamer Walzenlange zu einem Schülpenband und Zerkleinerung desselben auf das gewünschte Maß in bekannter Weise,
dadurch gekennzeichnet,
daß der Kompaktierung eine Vorverdichtungsstufe vorgeschaltet, der Vorverdichtungsstufe von der Inbetriebnahme bis zur Ausbildung eines in wesentlichen kontinuierlichen Schülpenbandes Natriumperborat-monohydrat mit einem Staubanteil, dessen Korndurchmesser kleiner 0,1 mm ist, im Bereich von 5 bis 30 Gew.-% zugeführt und bei der Vorverdichtung ein Druck von mehr als 20 kPa eingestellt wird, und daß die Temperatur der Walzenoberflache und der produktberührten Teile der Verdichtungszone des Vorverdichters sowie des vorzuverdichtenden und zu kompaktierenden Materials auf unterhalb 20 °C gehalten wird.

2. Verfahren nach Anspruch 1,
dadurch gekennzeichnet,
daß die Vorverdichtung mittels einer oder mehrerer zylindrischer oder zylindrisch-konischer Schnecken bei einem Druck von 80 bis 140 kPa vorgenommen und das vorverdichtete Material unmittelbar dem Walzenspalt der Kompaktierwalzen zugeführt wird und der Anpreßdruck 5 bis 20 kN/cm wirksamer Walzenlänge beträgt.

3. Verfahren nach Anspruch 1 oder 2,
dadurch gekennzeichnet,
daß die Temperatur der Oberfläche der Kompaktierwalzen im Bereich von 13 °C bis 17 °C gehalten wird.

4. Verfahren nach einem oder mehreren der Ansprüche 1 bis 3,
dadurch gekennzeichnet,
daß das bei der Kompaktierung erhaltene Schülpenband durch Brechen und, soweit erwünscht, Abrunden in eine granuläre Form überführt, unerwünschte Grob- und Feinanteile durch Klassieren abgetrennt und Feinanteile mit einem Korndurchmesser von kleiner 0,2 mm, insbesondere kleiner 0,1 mm, in die Vorverdichtungsstufe zurückgeführt werden.

## Claims

1. Method for increasing the bulk density of particulate sodium perborate monohydrate that has been produced by dehydration of sodium perborate tetrahydrate, by compacting the aforesaid particulate sodium perborate monohydrate in a roll press with structured rolls at a contact pressure of 5 to 50 kN/cm of effective roll length to form a flake sheet and comminuting the same to the desired size in a conventional manner,
characterised in that
a precompacting stage is connected ahead of the compacting, from the start-up until the development of an essentially continuous flake sheet sodium perborate monohydrate with a dust fraction (particle diameter below 0.1 mm) in the range of 5 to 30 wt % is fed to the precompacting stage and a pressure of more than 20 kPa is established during the precompacting, and that the temperature of the roll surface and of the parts of the compacting zone of the precompactor contacted by the product, as well as of the material to be precompacted and to be compacted, is maintained below 20 °C.

2. Method according to claim 1,
characterised in that
the precompacting is carried out with one or more cylindrical or cylindrical/conical screws at a pressure of 80 to 140 kPa and the precompacted material is fed directly to the roll gap of the compacting rolls and the contact pressure comes to 5 to 20 kN/cm of effective roll length.

3. Method according to claim 1 or 2,
characterised in that
the temperature of the surface of the compacting rolls is maintained in the range of 13 °C to 17 °C.

4. Method according to one or more of claims 1 to 3,
characterised in that
the flake sheet obtained during the compacting is converted into a granular form by crushing and, so far as desired, by rounding off, undesirable coarse and fine fractions are removed by classifying and fine fractions with a particle diameter of less than 0.2 mm, in particular less than 0.1 mm, are returned to the precompacting stage.

## Revendications

1. Procédé pour augmenter la densité apparente de perborate de sodium monohydrate sous forme de particules, qu'on a préparé par déshydratation de perborate de sodium tétrahydrate, par compactage du perborate de sodium monohydrate sous forme de particules dans une presse à cylindres ayant des cylindres structurés sous une pression d'application de 5 à 50 kW/cm de longueur efficace de cylindre pour former une nappe d'écailles et son broyage à la dimension souhaitée de manière connue,
caractérisé en ce que
une étape de prédensification est en amont de l'étape de compactage, on introduit à l'étape de prédensification depuis la mise en service jusqu'à la formation d'une nappe d'écailles essentiellement continue de perborate de sodium monohydrate, de la poudre dont le diamètre de grains est inférieur à 0,1 mm, dans l'intervalle de 5 à 30 % en poids et qu'on ajuste à la prédensification une pression supérieure à 20 kPa, et qu'on maintient la température de la surface des cylindres et des parties en contact avec le produit de la zone de densification du prédensificateur ainsi que du matériau à prédensifier et à compacter en dessous de 20°C.

2. Procédé selon la revendication 1,
caractérisé en ce que
on réalise la prédensification au moyen d'une ou plusieurs vis cylindriques ou cylindroconiques sous une pression de 80 à 140 kPa et qu'on introduit directement le matériau prédensifié dans le jeu des cylindres, des cylindres de compactage et que la pression d'application est 5 à 20 kN/cm de longueur efficace de cylindre.

3. Procédé selon la revendication 1 ou 2,
caractérisé en ce que
on maintient la température de la surface des cylindres de compactage dans l'intervalle de 13°C à 17°C.

4. Procédé selon l'une ou plusieurs des revendications 1 à 3,
caractérisé en ce que
on transforme la nappe d'écailles obtenue par compactage par broyage et, si c'est souhaité ébavurage en une forme granulaire, on sépare les fractions fines et grossières non souhaitées par classification et on recycle les fractions fines ayant une granulométrie inférieure à 0,2 mm, notamment inférieure à 0,1 mm, à l'étape de prédensification.
